Europäisches Patentamt

European Patent Office

Office européen des brevets

(11) Publication number: 0 446 565 A1

# EUROPEAN PATENT APPLICATION

(21) Application number: 90830544.4

(22) Date of filing: 20.11.90

(51) Int. Cl.⁵: **B22D 17/26**, B29C 45/17, B22D 17/20

(30) Priority: 14.02.90 IT 511690

(43) Date of publication of application:
18.09.91 Bulletin 91/38

(84) Designated Contracting States:
AT BE CH DE ES FR GB IT LI NL SE

(71) Applicant: M.G.P. ITALIA S.r.l.
Via Don Bergomi (Loc.Santuario)
I-25030 Castelmella (Brescia)(IT)

(72) Inventor: **Corini, Giuliano**
**44 Via Gilli**
**I-25062 Concesio, Brescia, S. Vigilio(IT)**

(74) Representative: **Manzoni, Alessandro**
**MANZONI & MANZONI - UFFICIO**
**INTERNAZIONALE BREVETTI P.le Arnaldo n.**
**2**
**I-25121 Brescia(IT)**

(54) Clamping platen positioning device in die-casting or injection moulding machines.

(57) The invention relates to a device for the changing of position of the clamping or reaction platen (15) along the columns (12) of die-casting or injection moulding machines which includes, for each column (12), a rotating threaded sleave (17) with an external thread (18) which does not translate onto the column (12) fitted into a threaded hole (19) cut into the clamping platen (15) and resting against a reaction block (20) fitted to the end of the column. The translation and the positioning of the clamping platen (15) corresponds to the rotation of the threaded sleeve (17) keeping the reaction bearings (21) moulded by the end blocks (20) and therefore the elongation factor of the columns variable.

The present invention relates to improved die-casting or injection moulding machines and in particular concerns a device for the changing of position of the clamping platen in said machines.

The die-casting or injection moulding machines substantially include: a bed-plate; four horizontal columns which are placed above the bed-plate in accordance with the vertex of a quadrilateral, and pass through a fixed die-holder platen which is fixed to the bed-plate and rests against reaction blocks fitted at one end of the columns, then passing through a moving die-holder platen which slides along the bed-plate and is driven along the column to and from the fixed die-holder platen and finally through a clamping or reaction platen, which can be positioned on the bed-plate and rested against reaction blocks fitted at the other end of the columns; and means carried by the clamping platen to block the die-holder platens in a closed position.

The distance between the fixed and moving die-holder platens can vary depending on the die fitted and in use. The clamping or reaction platen has to always assure the closure and correct functioning of the machine.

Presently for the movement and positioning of the clamping platen, the columns have a threaded part at least on the ends near the said platen, and have nuts against which the platen rests. In this way, by screwing and unscrewing the nuts, the closing position along the columns can be varied with respect to the fixed and moving die-holder platens.

However, the thread weakens the columns and causes a lack of reversibility during their fitting. Furthermore, a bigger disadvantage with the varying of position of the clamping platen is that the reaction platen along the columns, made up of nuts, is also changed each time and therefore causes a change in the elongation factor of the columns under pressure, that is to say when the machine is closed and working. In other words, the distance between the block of the fixed die-holder and the reaction blocks which are made of the nuts against which the clamping platen rests varies depending on the position of the clamping platen, therefore the length of the columns under pressure also varies and leads to a variation of the elongation factor of the columns. In practice, these columns of equal working force will be functioning in especially difficult conditions as much as the clamping platen is near the die-holder platens in that the elongation of the columns is reduced with the lessening of their length under tensile stress.

The present invention aims to eliminate the above mentioned inconveniences and disadvantages by always keeping the elongation factor of the columns constant whatever the position of the clamping platens.

To this end, the device according to this invention, applicable to the die-casting or injection moulding machines as mentioned, includes for each column, an external threaded sleeve that rotates without translating onto the column and is engaged in a threaded hole which is cut into the clamping platen and rests against a reaction block fitted to the end of the column.

In this way, the rotation of the threaded sleeve on the columns corresponds to the translation and positioning of the clamping platen, but this will always rest by the way of the said sleeve against the end blocks, whatever the position of the clamping platen.

Thus, we have the advantages of being able to use columns which are completely smooth, without thread or nuts and with the possibility of a symmetrical fitting that is to say reversible, and mainly to keep the elongation factor of the columns constant, even when changing the position of the movable and clamping platens of the machine in order that it can always work under the same stress conditions.

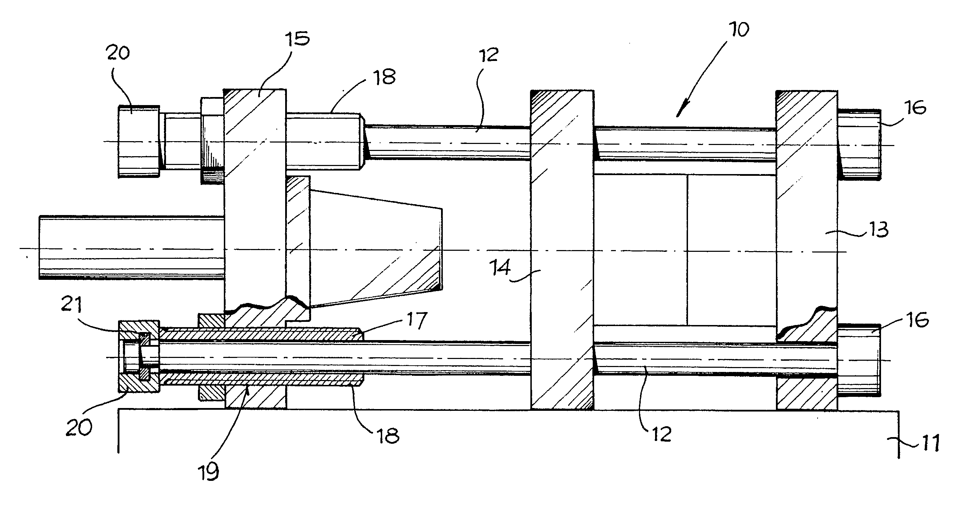

References to the attached drawing in which the single figure is the schematic view of a machine which incorporates the device in question will be made in the following description.

In said drawing a complete die-casting or injection moulding machine (10) is shown, with a bed-plate (11) above which four columns (12) extend horizontally in accordance with the vertex of a quadrilateral and pass through a fixed die-holder platen (13), a moving die-holder platen (14) and a clamping platen which are parallelly spaced. The fixed die-holder platen (13) is fixed to the bed-plate and rests against blocks (16) which are fitted to the adjacent ends of the columns (12). The moving die-holder platen (14) can be moved on the bed-plate (11) and along the columns (12) to and from the fixed one (13), the distance "H" between the fixed and moving platens (13,14) can be varied depending on the dies used. The clamping platen (15) is positionable on the bed plate (11) and along the columns (12) depending on the distance "H" between the die-holders (13,14) and includes means -not shown- for the blocking of the clamping of the die.

In accordance with the invention, a sleeve (17) with an external thread (18) is fitted on each column (12) near the clamping platen (15). Said sleeve (17) can rotate without translating on the relevant column, and with its thread, fits into a corresponding threaded hole (19) cut into the clamping platen (15) and rests against a reaction block (20) fitted to the adjacent end of the column.

The blocks (16) and (20) at the opposite ends of each colunn can be fitted in the same way, for example, each one by means of half rings (21) which are fitted in both the column and block. The blocks (20) can, what is more, make up a complete single piece with the relevant threaded sleeve (18,17). In each case the threaded sleeve (18,17) will have some appropriate parts for their rotation around their relevant column when the position of the clamping platen is changed and registered through a translation of the clamping platen on the bed plate. In each of its working positions, the clamping platen will nevertheless rest against the end blocks (20) through the use of threaded sleeve (17), making complete use of the actual elongation factor of the columns from the moment that the supports for the fixed platen and the clamping platen remain at the ends of the columns.

## Claims

1. A position changing device for the clamping platen in die-casting and injection moulding machines comprising: a bed-plate (11); four horizontal columns placed above the bed-plate, in accordance with the vertex of a quadrilateral, and which passes through a fixed die-holder platen (13) which is fixed to the bed-plate and rests against blocks (16) fitted to an end of the said columns, through a moving die-holder platen (14) which slides on the bed-plate and along the columns to and from the fixed die-holder and through a clamping platen (15) which is positionable on the bed-plate and rests against reaction blocks fitted to the other end of the columns; means carried by the clamping platen to block the die-holder platens in a closed positon, characterized in that each column comprises a rotating sleeve (17) with an external thread (18) assembled so as to rotate without translating onto the columns fitted into a threaded hole (19) correspondingly cut into the clamping platen (15) and resting against a reaction block (20) at the end of the column (12) so that a traslation and position of the clamping platen (15) corresponds to the rotation of the said sleeve.

2. The device according to claim 1, characterized in that the said threaded sleeve (17) is either separate or integral with the relative end block (20).

3. The device according to claims 1 and 2, characterized in that the said threaded sleeve (17,18) are set in rotation by an actuator.

4. The device according to claims 1 and 2, characterized in that at least the end blocks (20) for said threaded sleeve (17,18) are fitted to the columns with the use of split rings or half rings.

5. The device according to claim 1, characterized in that the blocks (16,20) at the opposite ends of each column (12) are fixed in working position with the use of split rings or half rings.

European
Patent Office

EUROPEAN SEARCH
REPORT

Application Number

EP 90 83 0544

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 249 491   (PRINCE CORP.)<br>* Column 3, line 63 - column 5, line 46; figures 1,3 * | 1-3 | B 22 D 17/26<br>B 29 C 45/17<br>B 22 D 17/20 |
| Y | | 4,5 | |
| Y | PATENT ABSTRACTS OF JAPAN, vol. 11, no. 344 (M-640)[2791], 11th November 1987;<br>& JP-A-62 124 062 (UBE IND. LTD) 05-06-1987<br>* Abstract; figure * | 4,5 | |
| X | US-E-3 204 8   (E.D. PRINCE)<br>* Figures 1-3; abstract * | 1-3 | |
| A | PLASTICS ENGINEERING, vol. 37, no. 6, June 1981, pages 33-36, Manchester, New Hampshire, US; A. ANSORGE:<br>"Can we learn something from die-casting?"<br>* Page 33; figures * | 1-5 | |
| A | US-A-3 756 757   (V.R. GRUNDMANN)<br>* Figures 1-3 * | 1-5 | |
| A | CH-A-5 747 83   (METAL CASTINGS DOEHLER LTD)<br>* Columns 2,3; figures * | 1-5 | TECHNICAL FIELDS SEARCHED (Int. Cl.5)<br><br>B 22 D<br>B 29 C |
| A | FR-A-2 256 828   (S.A. PATENT & INVENTIONS LTD)<br>* Claims; figures * | 1,2 | |
| A | FR-A-2 358 261   (K. HEHL)<br>* Claims 1-5; figures * | 1 | |
| A | PATENT ABSTRACTS OF JAPAN, vol. 8, no. 28 (M-274)[1465], 7th February 1984;<br>& JP-A-58 187 256 (HONDA GIKEN KOGYO K.K.) 01-11-1983<br>* Abstract; figures * | 1-5 | |

—/—

The present search report has been drawn up for all claims

| Place of search | Date of completion of search | Examiner |
|---|---|---|
| The Hague | 22 April 91 | BOMBEKE M.J.P. |

**EUROPEAN SEARCH
REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-8 522 78  (G. LAUTERJUNG)<br>* Claim 4; figures *<br>— — — — | 1 | |

**TECHNICAL FIELDS SEARCHED (Int. Cl.5)**

The present search report has been drawn up for all claims

| Place of search | Date of completion of search | Examiner |
|---|---|---|
| The Hague | 22 April 91 | BOMBEKE M.J.P. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document